# EUROPÄISCHE PATENTSCHRIFT

(11) **EP 1 964 130 B1**
(45) Veröffentlichungstag und Bekanntmachung des Hinweises auf die Patenterteilung: **16.06.2010**
(21) Anmeldenummer: 06829591.4
(22) Anmeldetag: 14.12.2006
(51) Int. Cl.: G21C 17/07

(54) **VORRICHTUNG ZUR DICHTIGKEITSPRÜFUNG VON BRENNSTABKAPSELN**
DEVICE FOR TESTING THE TIGHTNESS OF FUEL ROD CAPSULES
DISPOSITIF DE VERIFICATION DE L'ETANCHEITE DE CAPSULES DE BARRE COMBUSTIBLE

(30) Priorität: 20.12.2005 DE 102005060911
(43) Veröffentlichungstag der Anmeldung: 03.09.2008
(73) Patentinhaber: AREVA NP GmbH, 91052 Erlangen (DE)
(72) Erfinder: HUMMEL, Wolfgang, 92318 Neumarkt (DE)
(74) Vertreter: Mörtel & Höfner
(86) Internationale Anmeldenummer: PCT/EP2006/012030
(87) Internationale Veröffentlichungsnummer: WO 2007/071337

(56) Entgegenhaltungen:
- EP-A- 1 248 270
- DE-A1- 2 521 473
- DE-A1- 4 238 563
- JP-A- 7 294 678
- JP-A- 57 096 236
- US-A1- 4 016 749
- US-A1- 4 082 607

## Beschreibung

Die Erfindung betrifft eine Vorrichtung zur Dichtigkeitsprüfung von Brennstabbehältern. Die Brennstäbe eines Kernreaktors können während des Betriebes undicht werden. Defekte Brennstäbe werden in der Regel nach Zwischenlagerung im Lagerbecken des Kernkraftwerks zu einem Endlager oder zu einer Wiederaufbereitungsanlage transportiert. Um bei Lagerung und Transport ein Austreten insbesondere von radioaktiven Gasen zu verhindern, wird wenigstens ein Brennstab noch im Kernkraftwerk unter Wasser in einen Brennstabbehälter eingebracht. Behälter, die nur einen Brennstab aufnehmen werden auch als Brennstabkapseln bezeichnet (vgl. DE 101 16 627 A1). Ein Brennstabbehälter ist im Prinzip ein Rohr, das beidseitig von einer Verschlusskappe verschlossen ist. Zumindest die die Einführöffnung des Brennstabbehälters verschließende Verschlusskappe ist aufgeschraubt. Vor dem endgültigen Verschrauben wird das sich in der Brennstabkapsel befindliche Wasser durch Einblasen von Gas, beispielsweise von Luft entfernt. Da das Befüllen eines Brennstabbehälters mit einem Brennstab im Lagerbecken in einer Tiefe von bis zu 10 Metern erfolgt, geschieht die gesamte Handhabung über Manipulatoren. Dabei wird unterstellt, dass eine Verschlusskappe den Brennstabbehälter nicht hundertprozentig gasdicht abschließt.

Ein gängiges Verfahren zur Dichtigkeitsprüfung von Brennstäben selbst ist beispielsweise in der US 4,016,749 beschrieben.

Davon ausgehend ist es die Aufgabe der Erfindung, eine Vorrichtung zur,Dichtigkeitsprüfung von Brennstabbehältern vorzuschlagen. Diese Aufgabe wird mittels einer Vorrichtung nach Anspruch 1 gelöst.

Diese Aufgabe wird gemäß Anspruch 1 gelost durch eine Vorrichtung zur Durchführung einer Dichtigkeitsprüfung an einem wenigstens einen Brennstab enthaltenden Brennstabbehälter, wobei ein den Brennstabbehälter aufnehmende Prüfbehälter einen Köcher und eine daran angeschlossene Rohrleitung, in der das oben genannte Luftpolster erzeugt wird, enthält. Der Köcher umfasst einen Aufnahmebereich zur Aufnahme einer Brennstabkapsel und einen sich über den Aufnahmebereich hinaus erstreckenden Überstand. Außerdem weist er eine obere zum Einführen einer Brennstabkapsel dienende verschließbare Einführöffnung auf. Von dem Überstand zweigt die genannte Rohrleitung ab, die in einen zumindest angenähert vertikal verlaufenden unterhalb des Fluidpegels des Lagerbeckens angeordneten Rohrabschnitt und dann in einen aus dem Lagerbecken heraus führenden Rohrabschnitt übergeht, der mit einer Unterdruckquelle verbindbar ist. Im Bereich des vertikalen Rohrabschnitts ist ein Sichtfenster angeordnet. Außerdem weist der sich zwischen dem Überstand und dem vertikalen Rohrabschnitt erstreckende Leitungsbereich eine von einem Ventil gesteuerte Auslassöffnung auf. Bei einer besonders bevorzugten Ausgestaltung ist vorgesehen, dass in dem Überstand des Köchers ein Ventil angeordnet ist, das in einer Schaltstellung den Aufnahmebereich des Köchers mit dem vertikalen Rohrabschnitt und in einer zweiten Schaltstellung die Einführöffnung mit dem Aufnahmebereich verbindet, wobei der Öffnungsquerschnitt des Ventils so bemessen ist, dass eine Brennstabkapsel hindurch passt. Durch diese Ausgestaltung ist eine aufwändig zu handhabende Verschlusskappe für den Köcher nicht erforderlich. Das erwähnte Ventil erfüllt neben seiner normalen Ventilfunktion auch die Funktion einer Materialschleuse.

Auf diese Weise wird etwa mit dem Köcher innerhalb des Lagerbeckens eines Kernkraftwerks ein Prüfbehälter bereitgestellt, in dem ein wenigstens einen Brennstab beinhaltender Brennstabbehälter mit im Wesentlichen vertikaler Ausrichtung angeordnet wird, wobei zur Durchführung einer Dichtigkeitsprüfung oberhalb des Brennstabbehälters im Prüfbehälter ein Gaspolster, insbesondere ein Luftpolster erzeugt wird, welches mit einer Unterdruckquelle verbunden wird. In einem zwischen Gaspolster und Brennstabbehälter angeordneten Bereich befindet sich ein Sichtfenster, auf das eine Unterwasserkamera gerichtet ist. Im Falle eines Lecks können über die Unterwasserkamera aufsteigende Gasblasen beobachtet und aus der Anzahl und Größe der Gasblasen auf die Leckrate und damit das Ausmaß der Undichtigkeit des Brennstabbehälters geschlossen werden. Dieses Verfahren erfordert nur wenige Handhabungen unter Wasser, also solche, die mit einem Manipulator einfach durchgeführt werden können. Das Gaspolster lässt sich auf einfache Weise durch Einblasen von Gas bzw. Luft und Verdrängen des sich im Behälter befindlichen Wassers erzeugen. Dadurch, dass das Gaspolster mit einer Unterdruckquelle verbunden wird, wird der Druckunterschied zwischen dem Inneren des Brennstabbehälters und des ihn umgebenden Wassers im Prüfbehälter verstärkt oder ein solcher Druckunterschied erst -hergestellt und damit die Leckrate von Undichtigkeiten erhöht.

Zur Erzeugung des Gaspolsters wird vorzugsweise so vorgegangen, dass in dem im Lagerbecken untergetauchten, also mit Wasser gefüllten Behälter Gas eingeblasen und Wasser über eine zwischen dem oberen Ende der Brennstabbehälters und dem Sichtfenster bzw. dem späteren Luftpolster angeordneten Ausströmöffnung in das Lagerbecken verdrängt wird, wobei anschließend bei geschlossener Ausströmöffnung das Gaspolster mit einer Unterdruckquelle verbunden wird. Die Unterdruckquelle kann zweckmäßigerweise das in einem Kernkraftwerk üblicherweise vorhandene nukleare Entlüftungssystem sein. Alternativ oder zusätzlich kann eine Vakuumpumpe eingesetzt werden.

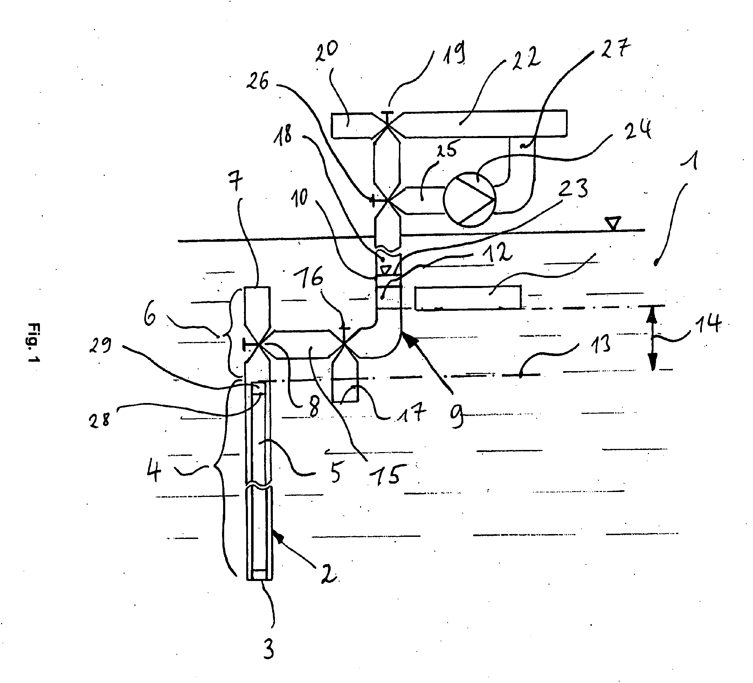

Die Erfindung wird nun unter Bezugnahme auf die beigefügte Abbildung, welche in schematischer Ansicht eine erfindungsgemäße Vorrichtung zeigt, näher erläutert.

In einem Lagerbecken 1 ist ein im Wesentlichen hülsenförmiger Köcher 2 in einer sicherheitsrelevanten Tiefe angeordnet. Der Köcher 2 ist unterseits mit einem Boden 3 verschlossen, erstreckt sich im Wesentlichen in Vertikalrichtung und weist einen Aufnahmebereich 4 auf, in dem ein Brennstabbehälter, etwa eine nur einen Brennstab beinhaltende Brennstabkapsel 5, auf die im Folgenden Bezug genommen wird, positionierbar ist. An den Aufnahmebereich 4 schließt sich ein Überstand 6 an, der eine stirnseitige Einführöffnung 7 trägt. Im Bereich des Überstands 6 ist ein Ventil 8 angeordnet, das zumindest zwei Schaltstellungen einnehmen kann, wobei es in der ersten Schaltstellung die Einführöffnung 7 mit dem Aufnahmebereich 4 verbindet. Das Ventil 8 weist ein Schließelement auf, dessen Öffnungsquerschnitt so bemessen ist, dass eine Brennstabkapsel 5 hindurch passt und in den Aufnahmebereich 4 eingeführt werden kann. In der zweiten Schaltstellung verschließt das Ventil die Einführöffnung 7 und stellt eine Verbindung zu einer seitlich abzweigenden Rohrleitung 9 her. Die Rohrleitung 9 umfasst einen im Wesentlichen vertikal verlaufenden Rohrabschnitt 10 und ist aus dem Lagerbecken 1 herausgeführt. Im Rohrabschnitt 10 ist ein Sichtfenster 12 angeordnet. Es ist möglichst nahe an dem durch das obere Ende der Brennstabkapsel 5 vorgegebenen Höhenposition 13, jedenfalls so positioniert, dass sein Vertikalabstand 14 zur Höhenposition 13 und damit der dort anstehende hydrostatische Druck möglichst gering ist. Ein sich vom Überstand 6 bzw. vom Ventil 8 weg erstreckender Rohrabschnitt 15 ist über ein Ventil 16 mit dem Rohrabschnitt 10 verbunden. In einer ersten Schaltstellung verbindet das Ventil 16 den Rohrabschnitt 15 mit dem Rohrabschnitt 10. In einer zweiten Schaltstellung verbindet es den Rohrabschnitt 10 mit einer Ausströmöffnung 17, wobei es die Verbindung zum Rohrabschnitt 15 unterbricht.

Nachdem eine Brennstabkapsel 5 über das Ventil 8 in den Köcher 2 eingeführt ist, wird das Ventil 8 in seine zweite Schaltstellung gebracht, in der es die Verbindung zwischen Aufnahmebereich 4 und Rohrleitung 9 frei gibt. Um innerhalb des Rohrabschnitts 10 ein Gaspolster 18 zu erzeugen, ist an dem aus dem Lagerbecken 1 herausragenden Enden der Rohrleitung 9 ein Ventil 19 mit drei Anschlüssen angesetzt, wobei der eine Anschluss mit der Rohrleitung 9, der zweite Anschluss mit einer Druckleitung 20 und der dritte Anschluss mit einer Unterdruckleitung 22 verbunden ist. Das Ventil 19 weist zumindest zwei Schaltstellungen auf, wobei in der ersten Schaltstellung die Druckleitung 20 und in der zweiten Schaltstellung die Unterdruckleitung 22 mit der Rohrleitung 9 verbunden ist. Zur Erzeugung eines Gaspolsters 18 nimmt das Ventil 19 die erstgenannte Schaltstellung ein, wobei aus der Druckleitung 20 Druckluft in die Rohrleitung 9 eingeblasen wird. Um ein Verdrängen von darin enthaltenen Wasser zu ermöglichen, ist das Ventil 16 so gestellt, dass es die Ausströmöffnung 17 frei gibt. Nachdem der Fluidpegel 23 im Rohrabschnitt 10 die gewünschte Höhe erreicht hat, sich etwa kurz oberhalb des Sichtfensters 12 befindet, wird die Ausströmöffnung 17 geschlossen und das Ventil 19 so umgestellt, dass die Rohrleitung 9 mit Unterdruck beaufschlagbar wird. Als Unterdruckquelle kann das in einem Kernkraftwerk üblicherweise vorhandene nukleare Entlüftungssystem benutzt werden. In diesem Fall wäre die Unterdruckleitung 22 mit diesem System zu verbinden. Zusätzlich kann eine Vakuumpumpe 24 vorgesehen sein, welche saugseitig über einen Rohrabschnitt 25 und ein Ventil 26 an die Rohrleitung 9 angeschlossen ist. Druckseitig ist die Vakuumpumpe 24 über einen Rohrabschnitt 27 zweckmäßigerweise mit der Unterdruckleitung 22 bzw. mit dem nuklearen Entlüftungssystem verbunden. Mit der Vakuumpumpe 24 kann im Vergleich mit dem genannten Entlüftungssystem ein größerer und vor allen Dingen über einen längeren Zeitraum konstanter Unterdruck erzeugt werden. Letzterer ist für eine exakte Bestimmung der Leckrate einer Brennstabkapsel unumgänglich. Bei einer Wassertemperatur von 25° kann ein Unterdruck von max. 23 mbar erreicht werden, was dem Wasserdampfdruck bei der genannten Temperatur entspricht. Durch das angelegte Vakuum werden die Leckraten von vorhandenen Leckstellen, insbesondere im Trennfugenbereich 28 einer Verschlusskappe 29 der Brennstabkapsel 5 erhöht. Dabei ist ein Nachweis von Leckraten bis 1 x 10⁻⁶ Pa m³/s möglich. Die aus einer Leckstelle entweichenden Luftblasen gelangen über den Rohrabschnitt 15 und das Ventil 16 in den vertikal verlaufenden Rohrabschnitt 10 und dabei in den Bereich des Sichtfensters 12. In dessen Bereich ist eine Unterwasserkamera 30 angeordnet, mit der das Sichtfenster 12 passierende Luftblasen beobachtbar sind, wobei aus deren Anzahl und Größe auf das Ausmaß einer Undichtigkeit der Brennstabkapsel 5 geschlossen werden kann. Damit Luftblasen nicht in dem sich zwischen dem Ventil 8 und dem vertikalen Rohrabschnitt 10 erstreckenden Leitungsbereich keine Luftblasen festsetzen können, verläuft dieser schräg nach oben.

### Bezugszeichenliste

- 1: Lagerbecken
- 2: Köcher
- 3: Boden
- 4: Aufnahmebereich
- 5: Brennstabkapsel
- 6: Überstand
- 7: Einführöffnung
- 8: Ventil
- 9: Rohrleitung
- 10: Rohrabschnitt
- 12: Sichtfenster
- 13: Höhenposition
- 14: Vertikalabstand
- 15: Rohrabschnitt
- 16: Ventil
- 17: Ausströmöffnung
- 18: Luftpolster
- 19: Ventil
- 20: Druckleitung
- 22: Unterdruckleitung
- 23: Fluidpegel
- 24: Vakuumpumpe
- 25: Rohrabschnitt
- 26: Ventil
- 27: Rohrabschnitt
- 28: Trennfugenbereich
- 29: Verschlussklappe
- 30: Unterwasserkamera

## Patentansprüche

1. Vorrichtung für eine in einem Lagerbecken (1) durchführbare Dichtigkeitsprüfung von wenigstens einem einen Brennstab enthaltenden Brennstabbehälter, umfassend einen Köcher (2), der einen Aufnahmebereich (4) zur Aufnahme eines Brennstabbehälters und einen sich über den Aufnahmebereich (4) hinaus erstreckenden Überstand (6) aufweist, mit folgender weiterer Ausgestaltung:
- der Köcher weist eine obere zum Einführen eines Brennstabbehälters dienende verschließbare Einführöffnung (7) auf,
- von dem Überstand (6) zweigt eine Rohrleitung (9) ab, die in einen zumindest angenähert vertikal verlaufenden unterhalb eines Fluidpegels des Lagerbeckens (1) angeordneten Rohrabschnitt (10) und dann in einen aus dem Lagerbecken (1) herausführenden Rohrabschnitt übergeht, der wahlweise mit einer Gasdruck- oder einer Unterdruckquelle verbindbar ist,
- im Bereich des vertikalen Rohrabschnitts (10) ist ein Sichtfenster (12) angeordnet,
- der sich zwischen dem Überstand (6) und dem vertikalen Rohrabschnitt (10) erstreckende Leitungsbereich weist eine von einem Ventil (16) gesteuerte Auslassöffnung (17) auf.

2. Vorrichtung nach Anspruch 1, mit einem im Überstand angeordneten Ventil (8), das in einer ersten Schaltstellung den Aufnahmebereich (4) des Köchers (2) mit der Rohrleitung (9) und in einer zweiten Schaltstellung die Einführöffnung (7) mit dem Aufnahmebereich (4) verbindet, wobei der Öffnungsquerschnitt des Ventils (8) so bemessen ist, dass ein Brennstabbehälter hindurch passt.

3. Vorrichtung nach Anspruch 1 oder 2, bei der im Bereich des Sichtfensters (12) eine Unterwasserkamera (30) angeordnet ist.

## Claims

1. Apparatus for a leak-tightness examination, which can be carried out in a storage pool (1), of at least one fuel-rod container containing a fuel rod, comprising a quiver (2) having a receiving region (4) for receiving a fuel-rod container and a projection (6) which extends beyond the receiving region (4), having the following further configuration:
- the quiver has a closeable upper insertion opening (7) which is used for inserting a fuel-rod container,
- a pipe line (9) branches off from the projection (6), which pipe line (9) merges into a pipe section (10), which extends at least approximately vertically and is arranged underneath the fluid level of the storage pool (1), and then into a pipe section which leads out of the storage pool (1) and can optionally be connected to a gas pressure source or a negative pressure source,
- a viewing window (12) is arranged in the region of the vertical pipe section (10),
- the line region which extends between the projection (6) and the vertical pipe section (10) has an outlet opening (17) which is controlled by a valve (16).

2. Apparatus according to Claim 1, having a valve (8) which is arranged in the projection and connects, in a first switched position, the receiving region (4) of the quiver (2) to the pipeline (9) and, in a second switched position, the insertion opening (7) to the receiving region (4), wherein the opening cross section of the valve (8) is dimensioned such that a fuel-rod container fits through it.

3. Apparatus according to Claim 1 or 2, in which an underwater camera (30) is arranged in the region of the viewing window (12).

## Revendications

1. Dispositif pour un essai d'étanchéité, pouvant être effectué dans une piscine de stockage (1), d'au moins un conteneur de barre de combustible contenant une barre de combustible, comprenant un carquois (2), qui présente une zone de logement (4) pour le logement d'un conteneur de barre de combustible et une partie saillante (6) s'étendant au-delà de la zone de logement (4), avec l'autre conception suivante :
- le carquois présente une ouverture d'introduction (7) supérieure, pouvant être fermée et servant à l'introduction d'un conteneur de barre de combustible,
- de la partie saillante (6) part une conduite (9), qui fait place à une partie de tube (10) agencée au moins approximativement verticalement et disposée au-dessous d'un niveau de fluide de la piscine de stockage (1) et ensuite à une partie tubulaire sortant de la piscine de stockage (1), laquelle peut être reliée au choix à une source de pression de gaz ou une source de dépression,
- une fenêtre d'inspection (12) est disposée dans la zone de la partie de tube (10) verticale,
- la zone de conduite s'étendant entre la partie saillante (6) et la partie de tube (10) verticale présente une ouverture de sortie (17) commandée par une vanne (16).

2. Dispositif selon la revendication 1, présentant une vanne (8) disposée dans la partie saillante, qui relie dans une première position de commutation la zone de logement (4) du carquois (2) à la conduite (9) et dans une seconde position de commutation l'ouverture d'introduction (7) à la zone de logement (4), la section d'ouverture de la vanne (8) étant conçue de façon à permettre le passage d'un conteneur de barre de combustible.

3. Dispositif selon la revendication 1 ou 2, sur lequel une caméra sous-marine (30) est disposée dans la zone de la fenêtre d'inspection (12).
